(19) Europäisches Patentamt / European Patent Office / Office européen des brevets

(11) **EP 4 458 541 A1**

(12) **EUROPEAN PATENT APPLICATION**
published in accordance with Art. 153(4) EPC

(43) Date of publication:
06.11.2024 Bulletin 2024/45

(21) Application number: 22916136.9

(22) Date of filing: 27.12.2022

(51) International Patent Classification (IPC):
B29B 9/06 (2006.01)    C08J 9/16 (2006.01)
B29C 44/00 (2006.01)    B29C 48/345 (2019.01)
B29C 48/87 (2019.01)    B29C 48/92 (2019.01)

(52) Cooperative Patent Classification (CPC):
B29B 9/06; B29C 44/00; B29C 48/345;
B29C 48/87; B29C 48/92; C08J 9/16

(86) International application number:
PCT/JP2022/048373

(87) International publication number:
WO 2023/127914 (06.07.2023 Gazette 2023/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.12.2021 JP 2021214944

(71) Applicant: Kaneka Corporation
Osaka-shi, Osaka 530-8288 (JP)

(72) Inventor: GODA, Takayuki
Settsu-shi, Osaka 566-0072 (JP)

(74) Representative: Hoffmann Eitle
Patent- und Rechtsanwälte PartmbB
Arabellastraße 30
81925 München (DE)

(54) **METHOD FOR PRODUCING POLYPROPYLENE RESIN EXTRUDED FOAM PARTICLES**

(57) To produce, without a decrease in productivity, polypropylene-based resin extruded foamed particles having excellent qualities, a method for producing polypropylene-based resin extruded foamed particles includes: a melting and kneading step of melting and kneading, with use of an extruder, a composition containing a blowing agent and a resin mixture which contains a branched polypropylene-based resin; an extruding step of extruding the composition through holes of a die to a region which has a pressure lower than that in the extruder and which is a liquid phase; a chopping step of chopping the composition in the region; and a step of obtaining polypropylene-based resin extruded foamed particles. An interval between holes in a circumferential direction of the die and a temperature of the liquid phase are specific values.

FIG. 1

**Description**

Technical Field

The present invention relates to a method for producing polypropylene-based resin extruded foamed particles.

Background Art

As a method for obtaining thermoplastic resin foamed particles, an extrusion foaming method is known.

In a production method in which such an extrusion foaming method is used, first, a thermoplastic resin and a blowing agent are supplied to an extruder, melted and kneaded, and then cooled to obtain a foamable molten resin (molten resin containing the blowing agent). After that, the foamable molten resin (molten resin containing the blowing agent) is extruded to a low-pressure region through a microporous die attached to an end of the extruder, and then chopped to obtain thermoplastic resin foamed particles. In an extrusion foaming method in which carbon dioxide, the environmental load of which is low, is used as a blowing agent, gas retention properties at the time of foaming are lower than those in an extrusion foaming method in which an organic blowing agent is used. Thus, it is particularly difficult to obtain foamed particles having a high expansion rate by the extrusion foaming method in which carbon dioxide is used.

Chopping methods for obtaining foamed particles by an extrusion foaming method are roughly divided into cold cut methods and die face cut methods. The cold cut methods include a method in which (i) a molten resin that is extruded through a microporous die and that contains a blowing agent is foamed, (ii) a foamed product in the form of a strand is taken up while being cooled through a water tank, and then (iii) the foamed product is chopped (strand cut method). The die face cut methods are each a method in which a molten resin extruded through a microporous die is cut with use of a cutter that rotates while being in contact with a surface of the die or while ensuring a small gap between the cutter and the surface of the die.

The die face cut methods are further classified into the following three methods on the basis of a difference in cooling method: an underwater cut (hereinafter may be referred to as "UWC") method; a watering cut (hereinafter may be referred to as "WRC") method; and a hot cut (hereinafter may be referred to as "HC") method. The UWC method is a method in which (i) a chamber attached to an end of a die is filled with cooling water, having a pressure adjusted to a given pressure, such that the cooling water is in contact with a resin discharge surface of the die and (ii) a molten resin extruded through a microporous die is cut in water. The WRC method is a method in which (i) a cooling drum that is connected to a die and that has an inner circumferential surface along which cooling water flows is disposed downstream of the die and (ii) a molten resin cut with use of a cutter in air is cooled in the cooling water while being foamed or after having been foamed. The UWC method and the WRC method are each characterized in that the cooling water is also used to convey the resin to a water separator while cooling the resin.

The HC method does not employ a manner in which a resin is conveyed while being cooled, for example, with use of cooling water that flows in a cooling drum, unlike the WRC method. The HC method is a method in which a molten resin cut with use of a cutter in air is cooled in air while being foamed or after having been foamed. A conveyance method is generally carried out by air transportation.

For example, Patent Literature 1 discloses a method for producing polycarbonate resin foamed particles in which method an extrusion foaming method is used.

Citation List

[Patent Literature]

[Patent Literature 1]
Japanese Patent Application Publication Tokukai No. 2018-144299

Summary of Invention

Technical Problem

However, conventional techniques as described above are not sufficient from the viewpoint of improving the qualities (reduction in open cells and maintenance of an expansion rate at a target rate) and the production stability of polypropylene-based resin extruded foamed particles without decreasing productivity, and thus have room for further improvement.

An object of an aspect of the present invention is to realize a method for producing polypropylene-based resin extruded foamed particles, which method can produce, without decreasing productivity, polypropylene-based resin extruded foamed particles having excellent qualities (reduction in open cells and maintenance of an expansion rate at a target rate) and excellent production stability.

Solution to Problem

In order to attain the above object, a method for producing polypropylene-based resin extruded foamed particles in accordance with an aspect of the present invention includes: a melting and kneading step of melting and kneading, with use of an extruder provided with a die having a plurality of holes, a composition containing a blowing agent and a resin mixture which contains a polypropylene-based resin having a branched structure; an extruding step of extruding the composition through the plurality of holes of the die to a region which has a pressure lower than that in the extruder and which is a liquid phase; a chopping step of chopping the composition in the region with use of a rotating cutter blade; and a step of obtaining polypropylene-based resin extruded foamed particles, wherein in the die, an interval between adjacent ones of the plurality of holes in a circumferential direction is not less than 6.5 mm, and a temperature of the liquid phase is not lower than 65°C.

Advantageous Effects of Invention

An aspect of the present invention makes it possible to produce, without decreasing productivity, polypropylene-based resin extruded foamed particles having excellent qualities (reduction in open cells and maintenance of an expansion rate at a target rate) and excellent production stability.

Brief Description of Drawings

Fig. 1 is a drawing schematically illustrating a configuration example of a production device used in a method for producing polypropylene-based resin extruded foamed particles in accordance with an embodiment of the present invention.
Fig. 2 is a plan view illustrating intervals between holes of a die used in the method for producing polypropylene-based resin extruded foamed particles in accordance with an embodiment of the present invention.

Description of Embodiments

The following description will discuss embodiments of the present invention. The present invention is not, however, limited to these embodiments. The present invention is not limited to the configurations described below, but may be altered in various ways within the scope of the claims by a person skilled in the art. The present invention also encompasses, in its technical scope, any embodiment or example derived by combining, as appropriate, technical means disclosed in differing embodiments or examples. Further, a new technical feature can be formed by combining technical means disclosed in differing embodiments. All of the academic documents and patent literatures listed herein are incorporated by reference herein. Any numerical range expressed as "A to B" herein means "not less than A (inclusive of A and greater than A) and not more than B (inclusive of B and smaller than B)", unless otherwise stated.

[Technical idea]

A UWC method is a method in which (i) a chamber attached to an end of a die is filled with a liquid cooling medium (for example, water), having a pressure adjusted to a given pressure, such that the cooling medium is in contact with a face of the die and (ii) a molten resin extruded through a hole of the die is cut in the cooling medium (for example, water). The UWC method is characterized in that the cooling medium is also used to convey the resin to a subsequent device (water separator) while cooling the resin. The UWC method is a method in which a composition (also referred to as a molten resin) obtained by melting and kneading in an extruder is extruded into a liquid phase (into a liquid cooling medium, for example, into water) through a die and chopped with use of a chopping member (for example, cutter) provided immediately after the die and in the liquid phase.

As a method for improving productivity in the UWC method, there is a method in which the number of holes of the die is increased. As a measure to increase the number of the holes of the die, it is considered to shorten intervals between the holes of the die. In a case where the intervals between the holes of the die are shortened so as to increase the number of the holes, the throughput rate of the composition per hole of the die decreases, and therefore foamed particles exhibit a reduction in open cells. Note that the expression "reduction in open cells" refers to lowering of an open cell ratio. The foamed particles exhibiting a reduction in open cells have excellent qualities. Foamed particles which do not exhibit a reduction in open cells, that is, foamed particles which have a high open cell ratio have poor moldability (secondary processability of the foamed particles) and low compressive strength, and therefore are not preferable in terms of qualities.

On the other hand, in a case where the intervals between the holes of the die are excessively shortened, adjacent holes are excessively close to each other, and therefore there is a problem of adhesion. The adhesion is a phenomenon in which foamed particles discharged from a hole adhere to foamed particles discharged from an adjacent hole and these foamed particles consequently form a mass. Thus, the adhesion is not preferable from the viewpoint of production stability of foamed particles. That is, in consideration of the above problem of the adhesion, it was found that, in the conventional UWC method, it may be difficult to realize a method for producing, without decreasing productivity, polypropylene-based resin extruded foamed particles having excellent qualities (for example, reduction in open cells) and excellent production stability (prevention of adhesion).

Under the circumstances, the inventor of the present invention focused his attention on the flow rate and the temperature of a liquid phase in order to, in the UWC method, realize a method for producing, without decreasing productivity, polypropylene-based resin extruded foamed particles having excellent qualities (reduction in open cells) and excellent production stability (prevention of adhesion).

There is the following relationship between the flow rate of the liquid phase and the adhesion: as the flow rate of the liquid phase becomes higher, the adhesion is less likely to occur. Moreover, there is the following relationship between the temperature of the liquid phase and the adhesion: as the temperature of the liquid phase becomes lower, the adhesion is less likely to occur. Meanwhile, in a case where the temperature of the liquid phase is low, the molten resin rapidly cools down and solidifies before foaming, and therefore the expansion rate of polypropylene-based resin extruded foamed particles does not become high. In control of the temperature of the liquid phase, there is a trade-off relationship between occurrence of the adhesion and the expansion rate. In terms of qualities, in a case where it is taken into consideration to maintain the expansion rate at a target rate corresponding to the amount of a blowing agent, it is required to cause the adhesion to be unlikely to occur while causing the temperature of the liquid phase to be high.

The inventor of the present invention conducted diligent studies in order to realize a method for producing, without decreasing productivity, polypropylene-based resin extruded foamed particles satisfying the above requirement and having enhanced qualities (reduction in open cells and maintenance of an expansion rate at a target rate) and enhanced production stability (prevention of adhesion). As a result, the inventor of the present invention obtained a unique finding that it is possible to enhance, without decreasing productivity, qualities (reduction in open cells and maintenance of an expansion rate at a target rate) and production stability (prevention of adhesion) while satisfying the requirement, under the following conditions: (1) in the die, an interval between holes in a circumferential direction is not less than 6.5 mm; and (2) the temperature of the liquid phase is not lower than 65°C.

In a case where the holes of the die are set as in the above (1), it is possible to realize the throughput rate of the composition per hole of the die which throughput rate makes it possible to achieve a reduction in open cells, and possible to prevent adhesion. Moreover, by the above (2), it is possible to realize both prevention of adhesion and maintenance of the expansion rate at the target rate. As a result, by the above (1) and (2), it is possible to improve the qualities and the production stability of the polypropylene-based resin extruded foamed particles without decreasing productivity.

[Production device used in method for producing polypropylene-based resin extruded foamed particles in accordance with the present embodiment]

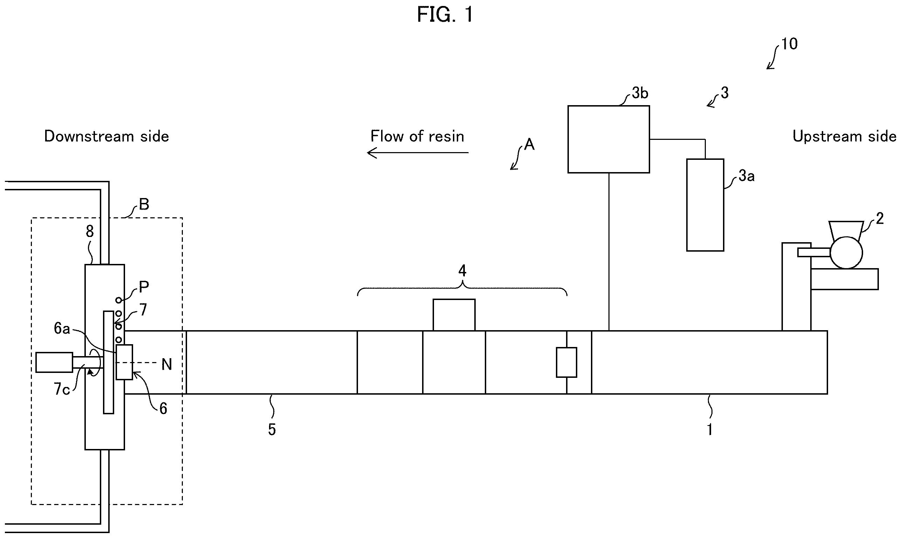

The following description will discuss, in detail, an embodiment of the present invention. Fig. 1 is a drawing schematically illustrating a configuration example of a production device 10 used in a method for producing polypropylene-based resin extruded foamed particles in accordance with the present embodiment (hereinafter may be referred to as the present production method). The production device 10 is a device for granulating polypropylene-based resin extruded foamed particles by extruding a resin obtained by melting and kneading a composition containing a blowing agent and a polypropylene-based resin having a branched structure (hereinafter, the obtained resin may be simply referred to as a molten resin) and cutting the resin in water.

As illustrated in Fig. 1, the production device 10 includes an extruder A for extruding the molten resin and a granulation section B attached to an end of the extruder. The extruder A includes a melting and kneading device 1 for melting and kneading the composition, a feeder 2, a blowing agent supply unit 3, a transportation section 4, and a cooling section 5. The feeder 2 and the blowing agent supply unit 3 are connected to the extruder A. The melting and kneading device 1, the transportation section 4, the cooling section 5, and the granulation section B are coupled to each other. The melting and kneading device 1, the transportation section 4, the cooling section 5, and the granulation section B are arranged in this order from the upstream side to the downstream side in the direction of extrusion of the molten resin. The transportation section 4 and the cooling section 5 may be transposed in arrangement order illustrated in Fig. 1. Transportation sections 4 may be provided on both the upstream side and the downstream side of the cooling section 5. In a case where the temperature of the resin is sufficiently decreased at an outlet of the extruder A, the cooling section 5 may be omitted.

In the production device 10, (i) raw materials, such as the polypropylene-based resin, of a resin mixture are supplied to the inside of the melting and kneading device 1 via the feeder 2, and (ii) the blowing agent is supplied to the inside of the melting and kneading device 1 via the blowing agent supply unit 3. The composition containing the polypropylene-based resin and the blowing agent in the melting and kneading device 1 is melted and kneaded. Then, the melted and kneaded molten resin passes through the transportation section 4 and the cooling section 5, and reaches the granulation section B. Then, in the granulation section B, the molten resin is granulated while being foamed, so that polypropylene-based resin extruded foamed particles P (hereinafter may be referred to as foamed particles P) are produced. Note, here, that, with respect to a flow of the molten resin from the melting and kneading device 1 to the granulation section B, the melting and kneading device 1 side is defined as the upstream side, and the granulation section B side is defined as the downstream side.

As the melting and kneading device 1, a melting and kneading device selected, as appropriate, from conventionally known melting and kneading devices in accordance with the type or the like of the resin to be granulated can be used. Examples of the melting and kneading device include melting and kneading extruders each of which employs a screw(s). As a melting and kneading extruder which employs a screw(s), a single screw extruder or a twin screw extruder can be, for example, employed. In a case where a twin screw extruder is employed, the directions of rotation of screws may be the same or may be different from each other.

The feeder 2 supplies the resin mixture to the melting and kneading device 1. Note that, although a single feeder 2 is provided in Fig. 1, the number of feeders 2 can be set, as appropriate, in accordance with the characteristics, the types, the number, and/or the like of the raw materials of foamed particles P.

The blowing agent supply unit 3 is constituted by a member that supplies the blowing agent to the molten resin melted and kneaded in the melting and kneading device 1. More specifically, the blowing agent supply unit 3 includes a blowing agent storage section 3a and a pump 3b. In the blowing agent supply unit 3, the blowing agent stored in the blowing agent storage section 3a is supplied to the extruder A by the pump 3b. In a case where the blowing agent is carbon dioxide, the blowing agent storage section 3a is a carbon dioxide cylinder, and the pump 3b is a high-pressure pump.

The transportation section 4 is constituted by a transportation member for transporting the molten resin from the melting and kneading device 1 to the granulation section B. The transportation member only needs to be a known transportation member used in an extrusion foaming method, and is, for example, a gear pump. The gear pump is a member useful for maintaining the pressure of the flow of the molten resin or increasing the pressure as appropriate. By the gear pump, it is possible to keep the flow rate of the molten resin constant.

The cooling section 5 is constituted by a cooling member for cooling the molten resin transported from the transportation section 4 (or from the melting and kneading device 1 in a case where the transportation section 4 is omitted). The cooling member only needs to be a known cooling member used in an extrusion foaming method. Examples of the cooling member include melt coolers, single screw extruders, and static mixers. The molten resin is slowly cooled while being mixed by a single screw extruder or a static mixer at a low shear rate, so that the molten resin is cooled to a given temperature.

In the production device 10, the raw materials, such as the polypropylene-based resin, supplied via the feeder 2 are melted and kneaded in the melting and kneading device 1. A barrel temperature for melting the raw materials is not particularly limited, provided that the barrel temperature falls within a range in which the supply of the blowing agent to the raw materials is not hindered. In a case where the polypropylene-based resin is not melted at a location in the melting and kneading device 1 at which location the blowing agent is supplied, there is a possibility that the blowing agent escapes to the upstream side of the extruder A. Therefore, it is preferable to set the barrel temperature such that, while the polypropylene-based resin is completely melted, deterioration or decomposition of the polypropylene-based resin does not occur. For example, the polypropylene-based resin is preferably melted and kneaded at a barrel temperature of not lower than 180°C and not higher than 220°C.

A kneaded product melted at such a resin temperature is mixed with the blowing agent in the melting and kneading device 1 by the blowing agent supply unit 3. Then, the molten resin containing the polypropylene-based resin and the blowing agent is moved while being further kneaded, and passes through the transportation section 4 and the cooling section 5, and reaches the granulation section B. Then, the molten resin is granulated and foamed in the granulation section B, so that the foamed particles P are produced.

The granulation section B includes a die 6, a cutter 7, and a chamber 8. The die 6 is attached to the end of the extruder A, which end is located on the downstream side. The chamber 8 is a tubular housing in which a resin discharge surface 6a of the die 6 and at least cutter blades of the cutter 7 are housed. The chamber 8 constitutes a region which has a pressure lower than at least that in the die 6 at the end of the extruder A and which is a liquid phase. Fig. 1 illustrates the granulation section B of a center cut type. However, the granulation section B may be of a side cut type. Note that the granulation section B is preferably of a center cut type, from the viewpoint of a reduction in size of the chamber 8.

The granulation section B is configured to granulate the molten resin by the UWC method. Therefore, the inside of the chamber 8 is filled with water or the like. The chamber attached to an end of the die is filled with the liquid phase (for example, cooling water), having a pressure adjusted to a given pressure lower than that in the extruder A, such that the liquid phase is in contact with the resin discharge surface 6a of the die 6. Then, in the granulation section B, the molten resin extruded from the resin discharge surface 6a of the die 6 is cut by the cutter 7 in the liquid phase.

The die 6 is disposed at the most downstream side in the flow of the molten resin. The die 6 has the resin discharge surface 6a from which the molten resin extruded from the extruder A is discharged. In the resin discharge surface 6a, holes through which the molten resin extruded from the extruder A passes are formed.

The cutter 7 is a member for cutting the molten resin discharged from the resin discharge surface 6a through the holes of the die 6. The cutter blades of the cutter 7 are disposed such that the cutter blades face the resin discharge surface 6a. The cutter 7 has a plurality of cutter blades and a rotation shaft 7c. The cutter blades are disposed such that the cutter blades face the resin discharge surface 6a, and rotate about the rotation shaft 7c. The cutter blades are configured to, while rotating, push the resin discharge surface 6a of the die 6 or maintain a small amount of clearance between the resin discharge surface 6a and the cutter blades.

The production device 10 illustrated in Fig. 1 is a device which is of a center cut type and in which the rotation shaft 7c of the cutter 7 and the central axis N of the die 6 are aligned.

[Method for producing polypropylene-based resin extruded foamed particles in accordance with the present embodiment]

A method for producing polypropylene-based resin extruded foamed particles in accordance with an embodiment of the present invention includes: a melting and kneading step of melting and kneading, with use of an extruder provided with a die having a plurality of holes, a composition containing a blowing agent and a resin mixture which contains a polypropylene-based resin having a branched structure; an extruding step of extruding the composition through the plurality of holes of the die to a region which has a pressure lower than that in the extruder and which is a liquid phase; a chopping step of chopping the composition in the region with use of a rotating cutter blade; and a step of obtaining polypropylene-based resin extruded foamed particles, wherein in the die, an interval between adjacent ones of the plurality of holes in a circumferential direction is not less than 6.5 mm, and a temperature of the liquid phase is not lower than 65°C.

In the present specification, the "region which is a liquid phase" may be referred to as a "liquid phase region", the "polypropylene-based resin having a branched structure" may be referred to as a "branched polypropylene-based resin", the "polypropylene-based resin extruded foamed particles" may be referred to as "extruded foamed particles", the "composition containing a blowing agent and a polypropylene-based resin having a branched structure" may be referred to as a "composition", and the "method for producing polypropylene-based resin extruded foamed particles in accordance with an embodiment of the present invention" may be referred to as the "present production method".

Since the present production method has the above configuration, the present production method has an advantage that it is possible to obtain, with high productivity, the polypropylene-based resin extruded foamed particles having excellent qualities and excellent production stability. More specifically, the present production method has an advantage that, in an underwater cut method, even in a case of a high-production condition in which the throughput rate of the composition per hole of the die is increased, it is possible to obtain the polypropylene-based resin extruded foamed particles which are prevented from adhering to each other, which exhibit an excellent reduction in open cells, and which are capable of maintaining an expansion rate at a target rate.

(Intervals between holes of die)

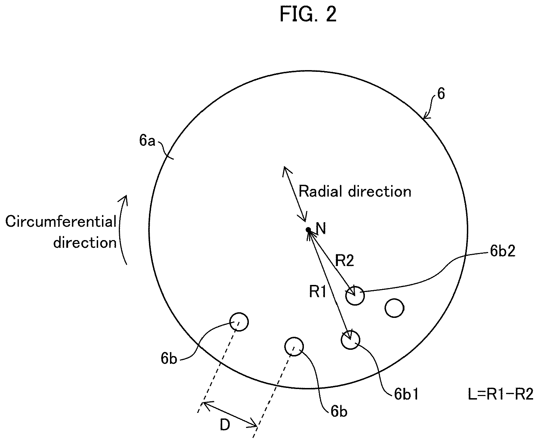

Fig. 2 is a plan view illustrating intervals between holes 6b of the die 6. As illustrated in Fig. 2, the die 6 can be assumed as a circle having the central axis N as an axis, and the intervals between the holes 6b of the die 6 can be defined as an interval D in the circumferential direction and an interval L in the radial direction.

The interval D between holes 6b in the circumferential direction is defined as an interval between holes 6b which are adjacent to each other in the circumferential direction. On the other hand, the interval L between holes 6b in the radial direction is defined on the basis of, for example, distances between the central axis N and each of two holes 6b1 and 6b2 which are adjacent to each other. That is, the interval L is defined as a difference between (i) a distance R1 between the center of the hole 6b1 and the central axis N and (ii) a distance R2 between the center of the hole 6b2 and the central axis N.

In the UWC method, cutter blades rotate in a direction perpendicular to the radial direction. That is, it can be said that the cutter blades rotate in the circumferential direction of the die 6. Therefore, with regard to effects of arrangement of the holes 6b on adhesion of the polypropylene-based resin extruded foamed particles by the cutter blades, an effect of arrangement of the holes 6b in the circumferential direction is greater than an effect of arrangement of the holes 6b1 and 6b2 in the radial direction. That is, the interval D between the holes 6b in the circumferential direction is important in preventing adhesion of the polypropylene-based resin extruded foamed particles.

In the present production method, the interval D between the holes 6b in the circumferential direction is not less than 6.5 mm, preferably not less than 7 mm, and more preferably not less than 8 mm. In a case where the interval D falls within the above numerical range, it is possible to prevent adhesion of the polypropylene-based resin extruded foamed particles.

Moreover, in a case where the interval D falls within the above numerical range, it is possible to reduce the throughput rate of the composition per hole of the die 6. In a case where the throughput rate of the composition per hole of the die is reduced, the extruded foamed particles tend to exhibit a reduction in open cells. As a result, it is possible to improve the qualities of the extruded foamed particles.

The upper limit of the interval D is not particularly limited, but is preferably not more than 12 mm, more preferably not more than 10 mm, even more preferably less than 10 mm, and particularly preferably not more than 9 mm, from the viewpoint of increasing the number of holes of the die 6.

The interval L of the holes 6b in the radial direction is not particularly limited, but is preferably 5.5 mm to 15 mm and more preferably 5.5 mm to 10 mm. In a case where the interval L falls within the above numerical range, there is an advantage that it is possible to narrow the widths of the cutter blades.

A cross-sectional shape which is a cross-sectional shape of a wall part constituting each of the holes 6b and which is perpendicular to the direction of extrusion (hereinafter may be simply referred to as the "shape of each of the holes 6b") is not particularly limited. The shape of each of the holes 6b of the die 6 is preferably a perfect circular shape, a substantially circular shape, an oval shape, or the like and more preferably a perfect circular shape or a substantially circular shape, because it is possible to obtain the extruded foamed particles having a spherical shape or a substantially spherical shape. Further, the number of the holes 6b is not particularly limited.

The diameter of each of the holes 6b is not particularly limited, but is preferably less than 1.6 mm, more preferably not more than 1.4 mm, even more preferably not more than 1.2 mm, and particularly preferably not more than 1.0 mm. In a case where the diameter of each of the holes 6b falls within the above numerical range, there is an advantage that the size of the extruded foamed particles becomes small at the same expansion rate and accordingly mold-filling properties during a molding process are improved.

The lower limit of the diameter of each of the holes 6b is not particularly limited, but is preferably not less than 0.3 mm and more preferably not less than 0.5 mm. In a case where the diameter of each of the holes 6b falls within the above numerical range, there is an advantage that the holes of the die 6 are prevented from being blocked.

Next, raw materials (components) used in the present production method will be described, and then each of the steps will be described.

(Resin mixture)

In the present production method, it can also be said that the resin mixture which contains the polypropylene-based resin having a branched structure is a component other than the blowing agent in the composition. The resin mixture contains the polypropylene-based resin having a branched structure, and can optionally further contain additives such as a cell nucleating agent and a coloring agent.

In the present specification, the "polypropylene-based resin having a branched structure" is intended to mean (a) a polypropylene-based resin in which molecules of a polypropylene-based resin to which a branched structure is not introduced are partially intermolecularly crosslinked with each other and (b) a polypropylene-based resin in which, as a branched chain, a diene compound or the like other than (poly)propylene is introduced to a polypropylene-based resin to which a branched structure is not introduced. Further, in the present specification, the polypropylene-based resin having a branched structure is preferably a polypropylene-based resin having a loss tangent tan $\delta$ of not more than 5 at 200°C and 0.1 rad/s. Other aspects (including a measurement method) of the loss tangent tan $\delta$ will be described in detail in a section (Polypropylene-based resin having a branched structure), which will be described later.

In the present specification, the "polypropylene-based resin to which a branched structure is not introduced" may be referred to as a "linear polypropylene-based resin", the "polypropylene-based resin having a branched structure" may be referred to as a "branched polypropylene-based resin", and the "linear polypropylene-based resin" and the "branched polypropylene-based resin" may be collectively referred to as a "polypropylene-based resin". It can also be said that the linear polypropylene-based resin is a raw material of the branched polypropylene-based resin.

In the present specification, the linear polypropylene-based resin is intended to mean a resin which contains a structural unit derived from a propylene monomer in a proportion of not less than 50 mol% with respect to 100 mol% of all structural units contained in the resin. In the present specification, the "structural unit derived from a propylene monomer" may be referred to as a "propylene unit".

(Linear polypropylene-based resin)

The linear polypropylene-based resin may be (a) a homopolymer of propylene, (b) a block copolymer or a random copolymer each of which is a copolymer of propylene and a monomer other than propylene, or (c) a mixture of at least two thereof. That is, the linear polypropylene-based resin may be at least one selected from the group including homopolymers of polypropylene and block copolymers and random copolymers each of which is a copolymer of propylene and a monomer other than propylene.

The linear polypropylene-based resin may have, in addition to the propylene unit, a structural unit derived from a monomer other than a propylene monomer, in such a manner as to have the structural unit in an amount of one or more units or as to have one or more types of such structural units. The "monomer other than a propylene monomer" used to produce the linear polypropylene-based resin may be referred to as a "comonomer". The "structural unit derived from a monomer other than a propylene monomer" contained in the linear polypropylene-based resin may be referred to as a "comonomer unit".

Examples of the comonomer include the following monomers: (a) $\alpha$-olefins having 2 or 4 to 12 carbon atoms, such as ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and 1-decene; (b) cyclic olefins such as cyclopentene, norbornene, and tetracyclo[6,2,11,8,13,6]-4-dodecene; (c) dienes such as 5-methylene-2-norbornene, 5-ethylidene-2-norbornene, 1,4-hexadiene, methyl-1,4-hexadiene, and 7-methyl-1,6-octadiene; and (d) vinyl-based monomers such as vinyl chloride, vinylidene chloride, acrylonitrile, methacrylonitrile, vinyl acetate, acrylic acid, acrylic esters, methacrylic acid, methacrylic esters, maleic acid, maleic anhydride, styrene-based monomers, vinyltoluene, and divinylbenzene.

Examples of the acrylic esters include methyl acrylate, ethyl acrylate, butyl acrylate, hexyl acrylate, 2-ethylhexyl acrylate, lauryl acrylate, stearyl acrylate, 2-hydroxyethyl acrylate, 2-hydroxypropyl acrylate, and glycidyl acrylate.

Examples of the methacrylic esters include methyl methacrylate, ethyl methacrylate, butyl methacrylate, hexyl methacrylate, 2-ethylhexyl methacrylate, lauryl methacrylate, stearyl methacrylate, 2-hydroxyethyl methacrylate, 2-hydroxypropyl methacrylate, and glycidyl methacrylate.

Examples of the styrene-based monomers include styrene, methylstyrene, dimethylstyrene, alpha methylstyrene, paramethylstyrene, ethylstyrene, diethylstyrene, isopropylstyrene, t-butylstyrene, bromostyrene, dibromostyrene, tribromostyrene, chlorostyrene, dichlorostyrene, and trichlorostyrene.

The linear polypropylene-based resin has, as the comonomer unit, preferably a structural unit derived from an $\alpha$-olefin having 2 or 4 to 12 carbon atoms, more preferably a structural unit derived from ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and/or 1-decene, more preferably a structural unit derived from ethylene, 1-butene, isobutene, 1-pentene, 3-methyl-1-butene, 1-hexene, and/or 4-methyl-1-pentene, even more preferably a structural unit derived from ethylene, 1-butene, isobutene, and/or 1-pentene, and more particularly preferably a structural unit derived from ethylene and/or 1-butene. This configuration has the following advantages: (a) the branched polypropylene-based resin having a high melt tension and a low gel fraction is obtained; and (b) the branched polypropylene-based resin to be obtained makes it possible to provide the polypropylene-based resin extruded foamed particles having excellent moldability.

The linear polypropylene-based resin is preferably a propylene homopolymer, a polypropylene-based block copolymer, and/or a polypropylene-based random copolymer, and more preferably a propylene homopolymer and/or a polypropylene-based random copolymer. This configuration has the following advantages: (a) the branched polypropylene-based resin having a high melt tension and a low gel fraction is obtained; and (b) the branched polypropylene-based resin to be obtained makes it possible to provide the polypropylene-based resin extruded foamed particles having excellent moldability.

The linear polypropylene-based resin contains the propylene unit in an amount of preferably not less than 90 mol%, more preferably not less than 93 mol%, even more preferably not less than 95 mol%, and particularly preferably not less than 97 mol%, with respect to 100 mol% of all structural units contained in the linear polypropylene-based resin. This configuration has an advantage that the branched polypropylene-based resin having a high melt tension and a low gel fraction is obtained.

The melting point of the linear polypropylene-based resin is not particularly limited. The melting point of the linear polypropylene-based resin is, for example, preferably 130°C to 165°C, more preferably 135°C to 164°C, even more preferably 138°C to 163°C, and particularly preferably 140°C to 162°C. In a case where the melting point of the linear polypropylene-based resin falls within the above-described range, there are the following advantages: (a) the extruded foamed particles to be obtained have excellent moldability and (b) the extruded foamed particles make it possible to provide an in-mold expanded product having excellent resistance to breakage. In a case where (a) the melting point of the linear polypropylene-based resin is not lower than 130°C, there are the following advantages: there is no possibility of a decrease in dimensional stability of the in-mold expanded product; there is no possibility of the in-mold expanded product having insufficient heat resistance; and the in-mold expanded product tends to have high compressive strength. In a case where (b) the melting point of the linear polypropylene-based resin is not higher than 165°C, there is an advantage that, since it is possible to mold the extruded foamed particles at a relatively low steam pressure, it is possible to mold the extruded foamed particles with use of a general-purpose molding machine for polypropylene-based resin extruded foamed particles.

In the present specification, the melting point of the linear polypropylene-based resin is a value determined by measurement carried out by differential scanning calorimetry (hereinafter referred to as a "DSC method"). A specific operational procedure is as follows: (1) the temperature of 5 mg to 6 mg of the linear polypropylene-based resin is increased from 40°C to 220°C at a temperature increase rate of 10°C/min so that the linear polypropylene-based resin is melted; (2) thereafter, the temperature of the melted linear polypropylene-based resin is decreased from 220°C to 40°C at a temperature decrease rate of 10°C/min so that the linear polypropylene-based resin is crystallized; and (3) then, the temperature of the crystallized linear polypropylene-based resin is increased from 40°C to 220°C at a temperature increase rate of 10°C/min. A temperature corresponding to a peak (melting peak) in a DSC curve of the linear polypropylene-based resin which DSC curve is obtained in the second temperature increase (that is, in (3)) can be determined as the melting point of the linear polypropylene-based resin. Note that, in a case where the DSC curve of the linear polypropylene-based resin which DSC curve is obtained in the second temperature increase by the above-described method has a plurality of peaks (melting peaks), a temperature corresponding to a peak (melting peak) at which a melting heat quantity is the greatest is regarded as the melting point of the linear polypropylene-based resin. As a differential scanning calorimeter, DSC6200 type manufactured by Seiko Instruments Inc. can be used, for example.

The melt flow rate (MFR) of the linear polypropylene-based resin is not particularly limited. The MFR of the linear polypropylene-based resin is, for example, preferably 0.5 g/ 10 minutes to 50.0 g/10 minutes, more preferably 1.0 g/10 minutes to 30.0 g/ 10 minutes, even more preferably 2.0 g/ 10 minutes to 20.0 g/ 10 minutes, and particularly preferably 2.0 g/ 10 minutes to 10.0 g/ 10 minutes. In a case where the MFR of the linear polypropylene-based resin falls within the above range, there is an advantage that it is possible to easily obtain the branched polypropylene-based resin having an MFR of 0.5 g/ 10 minutes to 20 g/ 10 minutes.

In the present specification, the MFR of the linear polypropylene-based resin is a value determined by measurement carried out with use of an MFR measuring instrument described in JIS K7210 under the following conditions: the diameter of an orifice is 2.0959 $\pm$ 0.0050 mm$\varphi$; the length of the orifice is 8.000 $\pm$ 0.025 mm; a load is 2160 g; and a temperature is 230 $\pm$ 0.2°C.

(Polypropylene-based resin having branched structure)

The polypropylene-based resin having a branched structure (branched polypropylene-based resin) can be obtained by introducing a branched structure into the linear polypropylene-based resin. A method for introducing the branched structure into the linear polypropylene-based resin is not particularly limited. Examples of the method include (a1) a method in which the linear polypropylene-based resin is irradiated with radial rays and (a2) a method in which a mixture that contains the linear polypropylene-based resin, a conjugated diene-based compound, and a radical polymerization initiator are melted and kneaded. In the method (a2), the conjugated diene-based compound is preferably isoprene and/or butadiene.

Examples of a specific method of the method (a1) include a method disclosed in Japanese Translation of PCT International Publication, Tokuhyo, No. 2002-542360.

The method (a2) is further described. In the method (a2), it is possible to obtain the branched polypropylene-based resin, for example, by sequentially carrying out the following (i) through (iv): (i) the mixture of the linear polypropylene-based resin, the conjugated diene-based compound such as isoprene and/or butadiene, and the radical polymerization initiator such as an organic peroxide is melt and kneaded in a device provided with a die; (ii) an obtained melted and kneaded product is extruded through the die; (iii) the extruded melted and kneaded product (also referred to as a strand) is cooled; and (iv) the strand is chopped simultaneously with or after cooling of the strand. Examples of a specific method of the method (a2) include a method disclosed in WO2020/ 004429.

In an embodiment of the present invention, the branched polypropylene-based resin is preferably a branched polypropylene-based resin obtained by the method (a2), because (i) it is possible to stably introduce the branched structure into the linear polypropylene-based resin, and the reproducibility of introduction of the branched structure is high and/or (ii) there is no need for a complicated facility and it is possible to obtain the branched polypropylene-based resin with high productivity.

The loss tangent tan $\delta$ of the branched polypropylene-based resin can be smaller than the loss tangent tan $\delta$ of the linear polypropylene-based resin. The loss tangent tan $\delta$ is a ratio (G"/G') between a storage modulus G' and a loss modulus G". When the loss tangent tan $\delta$ of the resin is smaller, it is possible to improve, to a greater degree, the moldability of the polypropylene-based resin extruded foamed particles to be obtained. The loss tangent tan $\delta$ of the branched polypropylene-based resin at 200°C and 0.1 rad/s is preferably not more than 5, more preferably not more than 4, even more preferably not more than 3, and still more preferably not more than 2.

Here is a description of a method for measuring the loss tangent tan $\delta$ in the present specification. In the present specification, the loss tangent tan δ, the storage modulus G', and the loss modulus G" are measured through a vibration experiment carried out with use of a rotational rheometer (manufactured by TA Instruments, product name: ARES), in a nitrogen atmosphere, at a measurement temperature of 200°C, and at a measurement angular frequency of 0.1 rad/s. The details of the measurement are the following (1) to (3): (1) a sample resin (branched polypropylene-based resin) for measurement is sandwiched between two parallel plates (gap: 1 mm); (2) periodic strain generated by vibration is applied to the sample resin between the plates by driving one of the plates; and (3) from the waveform of shearing stress generated in response to the strain applied and a phase difference between the stress and the strain, the storage modulus G', the loss modulus G", and thee loss tangent tan δ are determined.

The melt flow rate of the branched polypropylene-based resin is not particularly limited. The MFR of the branched polypropylene-based resin is, for example, preferably 0.5 g/ 10 minutes to 20.0 g/10 minutes, more preferably 1.0 g/10 minutes to 15.0 g/ 10 minutes, and particularly preferably 2.0 g/ 10 minutes to 10.0 g/ 10 minutes.

In the present specification, the MFR of the branched polypropylene-based resin is a value determined by measurement carried out with use of an MFR measuring instrument described in JIS K7210 under the following conditions: the diameter of an orifice is 2.0959 ± 0.0050 mmφ; the length of the orifice is 8.000 ± 0.025 mm; a load is 2160 g; and a temperature is 230 ± 0.2°C.

The melt tension of the branched polypropylene-based resin is not particularly limited. The melt tension of the branched polypropylene-based resin is, for example, preferably 3 cN to 20 cN, more preferably 3 cN to 15 cN, and particularly preferably 3 cN to 10 cN.

In the present specification, the melt tension of the branched polypropylene-based resin is measured with use of Capilograph 1D (manufactured by TOYO SEIKI SEISAKU-SHO, LTD, Japan). The details of the measurement are the following (1) to (5): (1) a barrel that has a diameter of 9.55 mm and that has been heated to a test temperature (200°C) is filled with a sample resin (branched polypropylene-based resin) for measurement; (2) subsequently, the sample resin is heated for 10 minutes in the barrel, which has been heated to the test temperature (200°C); (3) subsequently, while the sample resin is discharged in the form of a strand through a capillary die (opening diameter: 1.0 mm, length: 10 mm) at a piston lowering speed (10 mm/min) which is kept constant, this strand-like resin is passed through a tension detecting pulley located 350 mm below the capillary die, and thereafter, take-up of the strand-like resin with use of a take-up roll is started; (4) after the drawing of the strand-like resin becomes stable, the speed at which the strand-like resin is taken up is increased from an initial speed of 1.0 m/min to a speed of 200 m/min at a constant rate in 4 minutes; (5) a load acting on the pulley, which is equipped with a load cell, at a point in time when the strand-like resin breaks is measured as the melt tension.

(Another resin or rubber)

The resin mixture may further contain rubber or a resin other than the branched polypropylene-based resin (the resin may be hereinafter referred to as "another resin"), provided that the effect of an embodiment of the present invention is not impaired. Examples of the another resin include (a) linear polypropylene-based resins such as an ethylene/propylene random copolymer, an ethylene/propylene block copolymer, and a propylene homopolymer, (b) ethylene-based resins such as high-density polyethylene, medium-density polyethylene, low-density polyethylene, linear low-density polyethylene, linear very-low-density polyethylene, an ethylene/vinyl acetate copolymer, an ethylene/acrylic acid copolymer, and an ethylene/methacrylic acid copolymer, and (c) styrene-based resins such as polystyrene, a styrene/maleic anhydride copolymer, and a styrene/ethylene copolymer. Examples of the rubber include olefin-based rubbers such as ethylene/propylene rubber, ethylene/butene rubber, ethylene/hexene rubber, and ethylene/octene rubber.

The amount of the another resin contained in the resin mixture is, for example, preferably not more than 60 parts by weight, more preferably not more than 40 parts by weight, and even more preferably not more than 20 parts by weight, with respect to 100 parts by weight of the resin mixture. The lower limit of the amount of the another resin is not particularly limited, and may be, for example, 0 parts by weight with respect to 100 parts by weight of the resin mixture.

The resin mixture may contain a cell nucleating agent for the purpose of controlling the number and shapes of cells in the extruded foamed particles to be obtained. As the cell nucleating agent, a conventionally known cell nucleating agent can be used. The resin mixture may or may not contain a coloring agent. As the coloring agent, a conventionally known coloring agent can be used.

The resin mixture may further contain, as necessary, any other component(s) which is/are (a) a stabilizer(s) such as an antioxidant, a metal deactivator, a phosphorous processing stabilizer, an ultraviolet absorber, an ultraviolet stabilizer, a fluorescent brightening agent, metallic soap, and/or an antacid adsorbent and/or (b) an additive(s) such as a crosslinking agent, a chain transfer agent, a lubricant, a plasticizer, a filler, a reinforcer, a flame retardant, and/or an antistatic agent. One of these components may be used solely, or two or more of these components may be used in combination.

(Melting point of resin mixture)

The melting point of the resin mixture is not particularly limited. The melting point of the resin mixture is, for example, preferably 130°C to 165°C, more preferably 135°C to 164°C, even more preferably 138°C to 163°C, and particularly preferably 140°C to 162°C. In a case where the melting point of the resin mixture falls within the above-described range, there are the following advantages: (a) the extruded foamed particles to be obtained have excellent moldability and (b) the extruded foamed particles make it possible to provide an in-mold expanded product having excellent resistance to breakage. In a case where (a) the melting point of the resin mixture is not lower than 130°C, there are the following advantages: there is no possibility of a decrease in dimensional stability of the in-mold expanded product; there is no possibility of the in-mold expanded product having insufficient heat resistance; and the in-mold expanded product tends to have high compressive strength. In a case where (b) the melting point of the resin mixture is not higher than 165°C, there is an advantage that, since it is possible to mold the extruded foamed particles at a relatively low steam pressure, it is possible to mold the extruded foamed particles with use of a general-purpose molding machine for polypropylene-based resin extruded foamed particles.

In the present specification, the melting point of the resin mixture is a value determined by measurement carried out by a DSC method. Specifically, the melting point of the resin mixture can be specified by the same method as the above-described method for measuring the melting point of the linear polypropylene-based resin, except that the resin mixture is used instead of the linear polypropylene-based resin.

(Composition)

In the present production method, a substance obtained by adding the blowing agent to the above-described resin mixture may be referred to as a "composition".

In the present production method, the blowing agent is not particularly limited, provided that the blowing agent is a conventionally known blowing agent. Examples of the blowing agent include (a) aliphatic hydrocarbons such as propane, normal butane, isobutane, normal pentane, isopentane, and hexane, (b) alicyclic hydrogens such as cyclopentane and cyclobutane, (c) inorganic gases such as air, nitrogen, and carbon dioxide, and (d) water. The blowing agent is preferably at least one selected from the group including normal butane, isobutane, and carbon dioxide. Among these, carbon dioxide is particularly preferably used as the blowing agent, in terms of low production costs and a low environmental load.

The amount of the blowing agent used may be adjusted, as appropriate, in accordance with the target expansion rate of the expanded product. In the present production method, the amount (the total amount) of the blowing agent used is, for example, preferably 0.5 parts by weight to 7.0 parts by weight, more preferably 0.5 parts by weight to 6.0 parts by weight, more preferably 0.5 parts by weight to 5.0 parts by weight, even more preferably 0.5 parts by weight to 4.0 parts by weight, and particularly preferably 0.5 parts by weight to 3.0 parts by weight, with respect to 100.0 parts by weight of the resin mixture. The "amount of the blowing agent used" can also refer to the "amount of carbon dioxide used", and can also refer to the "amount of the blowing agent (carbon dioxide) in the composition".

(Melting and kneading step)

The present production method includes the melting and kneading step of melting and kneading the composition containing the blowing agent and the resin mixture which contains the branched polypropylene-based resin. The melting and kneading step can refer to a step of melting the branched polypropylene-based resin and dissolving the blowing agent in the branched polypropylene-based resin, in a kneading device of the extruder. Further, the melting and kneading step can refer to a step of preparing a melted and kneaded product of the composition containing the blowing agent and the resin mixture which contains the branched polypropylene-based resin.

In the melting and kneading step, it is only necessary that the blowing agent be ultimately dissolved in the branched polypropylene-based resin. In the melting and kneading step, order and a method of supplying the branched polypropylene-based resin and the blowing agent to a melting and kneading section are not particularly limited, and, for example, the following method can be employed: a method in which (1) the branched polypropylene-based resin is supplied to the kneading device from a raw material supply device, and the branched polypropylene-based resin is melted and kneaded and (2) thereafter, the blowing agent is supplied, from a blowing agent supply device located in the middle of the kneading device, to the melted and kneaded branched polypropylene-based resin, that is, the composition is prepared (completed) in the kneading device, and then the composition is further melted and kneaded.

In a case where the another resin, the cell nucleating agent, and the any other component(s), which are used as necessary, are added to the composition in the above-described method, a method and order of supplying these raw materials to the kneading device are not particularly limited. The another resin, the cell nucleating agent, and the any other component(s), which are used as necessary, may be added simultaneously with the branched polypropylene-based resin and/or the blowing agent, or may be added separately and in random order.

In the melting and kneading step, a barrel temperature in the kneading device which temperature is for melting the raw materials such as the branched polypropylene-based resin is not particularly limited, provided that the barrel temperature falls within a range in which the supply of the blowing agent to the raw materials is not hindered. In a case where the branched polypropylene-based resin is not melted at a location in the kneading device at which location the blowing agent is supplied, there is a possibility that the blowing agent escapes to the upstream side of the kneading device. Therefore, it is preferable to set the barrel temperature such that, while the branched polypropylene-based resin is completely melted, deterioration or decomposition of the polypropylene-based resin does not occur. For example, the branched polypropylene-based resin is melted and kneaded at a barrel temperature of preferably 160°C to 260°C, more preferably 170°C to 240°C, and even more preferably 180°C to 220°C.

The melting and kneading step may further include a cooling step of decreasing the temperature of the melted and kneaded composition within a temperature range in which the melted and kneaded composition does not solidify, for example, after melting and kneading the composition by the above-described method. The cooling step is carried out by transporting, to a cooling section, the composition which has been melted and kneaded in the kneading device and cooling the composition to a desired temperature in the cooling section.

In a case where the cooling step is carried out in the cooling section, the temperature of the composition at an outlet part of the cooling section can be set, as appropriate, in accordance with the amount of carbon dioxide serving as the blowing agent, the throughput rate of the composition, and/or the like. The temperature of the composition at the outlet part of the cooling section can be controlled to fall within a desired range, by adjusting, for example, the temperature and heat transfer area of a cooling member and a time for which the composition stays in the cooling member.

(Extruding step)

The present production method includes the extruding step of extruding the composition through the die to the region which has a pressure lower than that in the extruder and which is a liquid phase. The extruding step can refer to a step of extruding, to the liquid phase through the die, the composition obtained in the melting and kneading step, that is, the melted and kneaded composition.

As the extruding step, a conventionally known method can be employed, provided that it is possible to extrude the composition through the die to the region which has a pressure lower than that in the extruder and which is a liquid phase. For example, as the extruding step, the following method can be employed: a method in which the composition is extruded to a chamber which is attached to an end of the die and which is filled with cooling water such that the cooling water is in contact with a resin discharge surface of the die and the liquid phase is formed.

In the present production method, the temperature of the liquid phase is not lower than 65°C, preferably not lower than 67°C, and more preferably not lower than 70°C. In a case where the temperature of the liquid phase is low, the extruded foamed particles are unlikely to adhere to each other, whereas the expansion rate of the extruded foamed particles tends not to be high. Therefore, from the viewpoint of increasing the expansion rate of the extruded foamed particles to a given value or higher, it is preferable that it be possible to prevent adhesion of the extruded foamed particles while increasing the temperature of the liquid phase. In the present production method, since the interval between the holes in the circumferential direction in the die is not less than 6.5 mm and the temperature of the liquid phase falls within the above numerical range, it is possible to prevent adhesion of the extruded foamed particles and moreover possible to increase the expansion rate of the extruded foamed particles to the given value or higher.

The upper limit of the temperature of the liquid phase is not particularly limited, but is preferably not higher than 80°C and more preferably not higher than 75°C, from the viewpoint of heating energy costs.

As the flow rate of the liquid phase becomes higher, adhesion of the extruded foamed particles tends to be less likely to occur. In the extruding step, the flow rate of the liquid phase is not particularly limited, provided that the flow rate makes it possible to prevent adhesion of the extruded foamed particles. The flow rate of the liquid phase is preferably not less than 20 $m^3$/hr and more preferably not less than 20.5 $m^3$/hr. The upper limit of the flow rate of the liquid phase is not particularly limited, but can be, for example, not more than 40 $m^3$/hr, from the viewpoint of pumping power.

In the extruding step, the throughput rate of the composition per hole of the die is not particularly limited, but is preferably not more than 4.0 kg/hr and more preferably not more than 3.5 kg/hr. In a case where the throughput rate of the composition per hole of the die falls within the above numerical range, it is possible to cause the extruded foamed particles to be obtained to exhibit a reduction in open cells, without decreasing productivity of the extruded foamed particles. As the throughput rate of the composition per hole of the die becomes lower, the extruded foamed particles to be obtained tend to exhibit a reduction in open cells. Meanwhile, in a case where the throughput rate of the composition per hole of the die is excessively low, the productivity of the extruded foamed particles decreases. An attempt to lower the throughput rate of the composition per hole of the die results in formation of a large number of holes in the die. In a case where a large number of holes are formed, intervals between the holes are shortened and accordingly the extruded foamed particles are more likely to adhere to each other. The throughput rate of the composition per hole of the die is preferably not less than 1 kg/hr and more preferably not less than 1.5 kg/hr, from in the viewpoint of maintaining the productivity of the extruded foamed particles at a given level or more.

Examples of a method for adjusting the throughput rate of the composition per hole of the die so that the throughput rate falls within a desired range include: a method in which adjustment is carried out by the total throughput rate of the composition; and a method in which adjustment is carried out by the number of the holes of the die.

In the extruding step, the composition is extruded to the region which has a pressure lower than that in the extruder and which is a liquid phase. The liquid phase of the region is not particularly limited, but is preferably water because water can be inexpensively and safely produced.

The pressure of the liquid phase with respect to the composition in the region does not affect adhesion but greatly affects the expansion rate of the extruded foamed particles. In a case where the pressure of the liquid phase is high, the expansion rate of the extruded foamed particles is low. The pressure of the liquid phase with respect to the composition in the region is preferably 0.01 MPa·G to 0.60 MPa·G, more preferably 0.01 MPa·G to 0.55 MPa·G, even more preferably 0.02 MPa·G to 0.55 MPa·G, and particularly preferably 0.02 MPa·G to 0.50 MPa·G, from the viewpoint of adjusting the expansion rate of the extruded foamed particles. This configuration has an advantage that adhesion of the extruded foamed particles to be obtained is easily suppressed. In the present specification, the "MPa" in the "MPa·G" is intended to mean a gage pressure.

(Chopping step)

The composition extruded through the die to the region which has a pressure lower than that in the extruder and which is a liquid phase starts foaming. In the chopping step, the composition which has not foamed yet or which is foaming may be chopped. Alternatively, the composition which has foamed may be chopped. In a case where the composition which has not foamed yet or which is foaming is chopped, the chopped composition can complete foaming in the region. The chopping step can refer to a step of chopping the composition in particulate form to prepare the polypropylene-based resin extruded foamed particles. In the present production method, the chopped composition is cooled in the region while being foaming or after foaming, and starts solidifying while being foaming or after completing foaming.

A method of chopping the composition extruded through the die is not particularly limited. Examples of the method include a method in which the composition is chopped with use of a cutter or the like that is provided subsequently to the die along the direction of extrusion.

(Step of obtaining polypropylene-based resin extruded foamed particles)

The step of obtaining the polypropylene-based resin extruded foamed particles can refer to a step of collecting the polypropylene-based resin extruded foamed particles prepared in the chopping step.

A method for collecting the polypropylene-based resin extruded foamed particles is not particularly limited. Examples of the method for collecting the polypropylene-based resin extruded foamed particles include centrifugal dehydration.

[Polypropylene-based resin extruded foamed particles]

In the present specification, the "polypropylene-based resin extruded foamed particles obtained by the present production method" may be also referred to as "present extruded foamed particles".

(Reduction in open cells)

The present extruded foamed particles have an advantage that the present extruded foamed particles have excellent qualities, specifically, an advantage that the present extruded foamed particles exhibit a reduction in open cells. The reduction in open cells can be evaluated on the basis of the open cell ratio of the extruded foamed particles.

The open cell ratio of the extruded foamed particles is measured by the following method: (1) the volume Vc ($cm^3$) of the extruded foamed particles is measured with use of the air comparison pycnometer; (2) subsequently, the whole extruded foamed particles whose Vc has been measured are submerged in ethanol contained in a graduated cylinder; (3) thereafter, an apparent volume Va ($cm^3$) of the extruded foamed particles is determined from the amount of a rise of the position of the ethanol in the graduated cylinder; and (4) the open cell ratio of the extruded foamed particles is calculated by the following expression:

$$\text{open cell ratio (\%)} = ((Va\text{-}Vc)\times 100)/Va.$$

In a case where the open cell ratio is not more than 6.5%, it can be evaluated that the extruded foamed particles exhibit a reduction in open cells. The open cell ratio of the present extruded foamed particles is not more than 6.5%, preferably not more than 5%, and more preferably not more than 3.5%.

(Expansion rate)

The present extruded foamed particles can exhibit an expansion rate falling within a range of preferably 2 times to 15 times. The expansion rate of the present extruded foamed particles is more preferably 2 times to 13 times, and even more preferably 2 times to 11 times. This configuration has an advantage that a polypropylene-based resin in-mold expanded product obtained with use of the extruded foamed particles exhibits, to a greater degree, characteristics such as the property of being formed in any shape, shock-absorbing properties, lightweight properties, and heat insulating properties.

In the present specification, the expansion rate of the polypropylene-based resin extruded foamed particles is calculated by the following method: (1) the weight w (g) of the extruded foamed particles is measured; (2) subsequently, the extruded foamed particles used to measure the weight are submerged in ethanol contained in a graduated cylinder, and the volume v (cm$^3$) of the extruded foamed particles is measured on the basis of the amount of a rise of the position of the liquid surface in the graduated cylinder; (3) the weight w (g) is divided by the volume v (cm$^3$) so that the density $\rho_1$ of the extruded foamed particles is calculated; (4) by carrying out operations similar to (1) to (3) with use of a base resin instead of the extruded foamed particles, the density $\rho_2$ of the base resin is calculated; and (5) the density $\rho_2$ of the base resin of the extruded foamed particles is divided by the density $\rho_1$ of the extruded foamed particles ($\rho_2/\rho_1$), and an obtained value is regarded as the expansion rate.

In the present specification, it can be said that the base resin is a resin component which substantially constitutes the extruded foamed particles. The density of the base resin of the extruded foamed particles does not substantially change, even by an operation of melting the extruded foamed particles under reduced pressure to return the extruded foamed particles to a resin lump. Therefore, the density of the resin lump obtained by melting the extruded foamed particles under reduced pressure can be regarded as the density of the base resin of the extruded foamed particles. In the present specification, obtaining a resin lump by melting the extruded foamed particles under reduced pressure may be referred to as "reversion-to-resin", and the resin lump obtained by the reversion-to-resin may be referred to as a "reversion resin".

Examples of a specific method for the reversion-to-resin include, but are not particularly limited to, a method in which the following (b1) to (b5) are sequentially carried out: (b1) the extruded foamed particles are put in a dryer having a temperature adjusted to a temperature that is sufficiently higher than the melting point of the linear polypropylene-based resin (for example, the melting point + 10°C); (b2) subsequently, the pressure inside the dryer is reduced to -0.05 MPa (gage pressure) to -0.10 MPa (gage pressure) over 5 minutes to 10 minutes with use of a vacuum pump; (b3) thereafter, the extruded foamed particles are left to stand in the dryer for 30 minutes for preparation of a resin lump (reversion resin); (b4) subsequently, the temperature inside the dryer is decreased to room temperature, and the pressure inside the dryer is then returned to normal pressure; and (b5) thereafter, the resin lump is taken out of the dryer.

(Adhesion)

Adhesion of the extruded foamed particles can be evaluated by visual observation. That is, in a case where the obtained extruded foamed particles do not adhere to each other, an evaluation can be made as "not adhering". In a case where the extruded foamed particles adhere to each other, an evaluation can be made as "adhering". In a case where the extruded foamed particles adhere to each other but adhesion is so loose that the extruded foamed particles no longer adhere to each other when the extruded foamed particles are passed through a sieve, an evaluation can be made as "loosely adhering".

The extruded foamed particles at a producible level are evaluated as "not adhering" or "loosely adhering".

[Method for producing polypropylene-based resin foamed molded product]

A method for producing a polypropylene-based resin foamed molded product in accordance with the present embodiment is a method for molding polypropylene-based resin extruded foamed particles produced by the above-described production method. In order to produce a polypropylene-based resin foamed molded product, it is possible to mold the polypropylene-based resin extruded foamed particles by a known method.

As has been described, a method for producing polypropylene-based resin extruded foamed particles in accordance with an embodiment of the present invention includes the following configurations:

<1> A method for producing polypropylene-based resin extruded foamed particles, including: a melting and kneading step of melting and kneading, with use of an extruder provided with a die having a plurality of holes, a composition containing a blowing agent and a resin mixture which contains a polypropylene-based resin having a branched structure;

an extruding step of extruding the composition through the plurality of holes of the die to a region which has a pressure lower than that in the extruder and which is a liquid phase;
a chopping step of chopping the composition in the region with use of a rotating cutter blade; and
a step of obtaining polypropylene-based resin extruded foamed particles, wherein
in the die, an interval between adjacent ones of the plurality of holes in a circumferential direction is not less than 6.5 mm, and
a temperature of the liquid phase is not lower than 65°C.

<2> The method described in <1>, wherein a flow rate of the liquid phase is not less than 20 m³/hr.
<3> The method described in <1> or <2>, wherein a throughput rate of the composition per hole of the die is not more than 4.0 kg/h.
<4> The method described in any one of <1> through <3>, wherein an expansion rate of the polypropylene-based resin extruded foamed particles obtained is 2 times to 15 times.
<5> The method described in any one of <1> through <4>, wherein, in the die, an interval between adjacent ones of the plurality of holes in a radial direction is 5.5 mm to 15 mm.
<6> A method for producing a polypropylene-based resin foamed molded product, including molding polypropylene-based resin extruded foamed particles produced by the method described in any one of <1> through <5>.
<6> The method described in any one of <1> through <5>, wherein, in the die, a diameter of each of the plurality of holes is less than 1.6 mm.
<7> The method described in any one of <1> through <6>, wherein a pressure of the liquid phase with respect to the composition in the region is 0.01 MPa·G to 0.60 MPa·G.
<8> The method described in any one of <1> through <7>, wherein the polypropylene-based resin having a branched structure is a resin obtained by melting and kneading a mixture containing a linear polypropylene-based resin, a conjugated diene-based compound, and a radical polymerization initiator.
<9> The method described in any one of <1> through <8>, wherein the polypropylene-based resin having a branched structure is a polypropylene-based resin having a loss tangent tan δ of not more than 5 at 200°C and 0.1 rad/s.
<10> The method described in any one of <1> through <9>, wherein a melt flow rate of the polypropylene-based resin having a branched structure is 0.5 g/ 10 minutes to 20.0 g/ 10 minutes.
<11> The method described in any one of <1> through <10>, wherein a melt tension of the polypropylene-based resin having a branched structure is 3 cN to 20 cN.
<12> The method described in any one of <1> through <11>, wherein a melting point of the resin mixture is 130°C to 165°C.
<13> The method described in any one of <1> through <12>, wherein the blowing agent is used in an amount of 0.5 parts by weight to 7.0 parts by weight with respect to 100.0 parts by weight of the resin mixture.
<14> The method described in any one of <1> through <13>, wherein an open cell ratio of the polypropylene-based resin extruded foamed particles obtained is not more than 6.5%.
<15> The method described in any one of <1> through <14>, wherein the upper limit of the interval between the adjacent ones of the plurality of holes in the circumferential direction is not more than 12 mm.
<16> The method described in any one of <1> through <15>, wherein, in the die, a lower limit of a diameter of each of the plurality of holes is not less than 0.3 mm.
<17> The method described in any one of <1> through <16>, wherein an upper limit of the temperature of the liquid phase is not higher than 80°C.
<18> The method described in any one of <1> through <17>, wherein an upper limit of a flow rate of the liquid phase is not more than 40 m³/hr.
<19> The method described in any one of <1> through <18>, wherein a throughput rate of the composition per hole of the die is not less than 1 kg/h.
<20> The method described in any one of < 1> through <19>, wherein the blowing agent is at least one selected from the group including normal butane, isobutane, and carbon dioxide.
<21> The method described in any one of <1> through <20>, wherein the polypropylene-based resin having a branched structure is a resin obtained by melting and kneading a mixture containing a linear polypropylene-based resin, a conjugated diene-based compound, and a radical polymerization initiator, and the conjugated diene-based compound is isoprene and/or butadiene.

<22> The method described in any one of < 1> through <21>, wherein the polypropylene-based resin having a branched structure is a resin obtained by melting and kneading a mixture containing a linear polypropylene-based resin, a conjugated diene-based compound, and a radical polymerization initiator, and the linear polypropylene-based resin is at least one selected from the group including homopolymers of polypropylene and block copolymers and random copolymers each of which is a copolymer of propylene and a monomer other than propylene.

<23> A method for producing a polypropylene-based resin foamed molded product, including molding polypropylene-based resin extruded foamed particles produced by the method described in any one of <1> through <22>.

Examples

The following description will discuss embodiments of the present invention in further detail with reference to Examples. Note, however, that the present invention is not limited by Examples below.

(Measurement method and evaluation method)

Test methods used to measure and evaluate various physical properties in Examples and Comparative Examples are as follows.

<Adhesion>

It was visually observed whether or not 5 g of obtained extruded foamed particles did not adhere to each other. In a case where the obtained extruded foamed particles did not adhere to each other, a determination was made as "No". In a case where the extruded foamed particles adhered to each other, a determination was made as "Yes". In a case where the obtained extruded foamed particles adhered to each other but adhesion was such that the extruded foamed particles no longer adhered to each other when the extruded foamed particles were passed through a sieve, a determination was made as "Somewhat yes".

Then, in cases where the determinations were made as "No" and "Somewhat yes", evaluations were made as "acceptable" with regard to adhesion.

<Expansion rate>

The expansion rate of the polypropylene-based resin extruded foamed particles was calculated by the following method: (1) the weight w (g) of the extruded foamed particles was measured; (2) subsequently, the extruded foamed particles used to measure the weight were submerged in ethanol contained in a graduated cylinder, and the volume v (cm$^3$) of the extruded foamed particles was measured on the basis of the amount of a rise of the position of the liquid surface in the graduated cylinder; (3) the weight w (g) was divided by the volume v (cm$^3$) so that the density $\rho 1$ of the extruded foamed particles was calculated; and (4) the density $\rho_2$ of a base resin of the extruded foamed particles was divided by the density $\rho_1$ of the extruded foamed particles ($\rho_2/\rho_1$), and an obtained value was regarded as the expansion rate. As the density $\rho_2$ of the base resin, a density of 0.9 g/cm$^3$ of a common polypropylene-based resin was employed.

In a case where the expansion rate of the extruded foamed particles was a target rate of 5.0 times to 6.0 time, an evaluation was made as "acceptable" with regard to the expansion rate.

<Open cell ratio>

The open cell ratio of the polypropylene-based resin extruded foamed particles was determined by measurement carried out with use of an air comparison pycnometer [Model 1000, manufactured by Tokyo-Science Co., Ltd.] in accordance with the method described in PROCEDURE C of ASTM D2856-87. More specifically, the open cell ratio of the extruded foamed particles was calculated by carrying out the following (1) to (3) in order: (1) the volume Vc (cm$^3$) of the extruded foamed particles was measured with use of the air comparison pycnometer; (2) subsequently, the whole extruded foamed particles whose Vc had been measured were submerged in ethanol contained in a graduated cylinder; (3) thereafter, an apparent volume Va (cm$^3$) of the extruded foamed particles was determined from the amount of a rise of the position of the ethanol in the graduated cylinder; and (4) the open cell ratio of the extruded foamed particles was calculated by the following expression:

$$\text{open cell ratio (\%)} = ((Va-Vc)\times100)/Va.$$

In a case where the open cell ratio was not more than 6.5%, an evaluation was made as "acceptable" with regard to a reduction in open cells.

<Overall evaluation>

An overall evaluation was made as "excellent" or "good" with respect to extruded foamed particles which were evaluated as "acceptable" with regard to all of the "adhesion", the "expansion rate", and the "reduction in open cells". Among the extruded foamed particles with respect to which such overall evaluations were made, an overall evaluation was made as "good" with respect to extruded foamed particles evaluated as "Somewhat yes" with regard to the "adhesion", and an overall evaluation was made as "excellent" with respect to extruded foamed particles evaluated as "No" with regard to the "adhesion".
An overall evaluation was made as "poor" with respect to extruded foamed particles which were not evaluated as "acceptable" with regard to at least one of the "adhesion", the "expansion rate", and the "reduction in open cells".

[Example 1]

<Production of polypropylene-based resin composition having branch>

A polypropylene-based resin composition having a branch was produced by the following method. A random polypropylene resin RD265CF (manufactured by Borouge) was supplied to a twin screw extruder, and 1.0 part by weight of t-butyl peroxy isopropyl monocarbonate (manufactured by NOF CORPORATION, PERBUTYL I) with respect to 100 parts by weight of RD265CF was supplied to the twin screw extruder as a radical polymerization initiator. Thereafter, with respect to the melted and kneaded RD265CF and the radical polymerization initiator, 0.4 parts by weight of isoprene with respect to 100 parts by weight of RD265CF was supplied to the twin screw extruder to prepare a resin mixture in the twin screw extruder. The amount of the resin mixture supplied to the twin screw extruder was 70 kg/h.
The prepared resin mixture was melted and kneaded in the twin screw extruder at a cylinder temperature of 180°C and a screw rotation speed of 230 rpm to obtain a polypropylene-based resin composition having a branch. The obtained polypropylene-based resin composition having a branch was discharged in the form of strands from a die at a throughput rate of 70 kg/h. The discharged polypropylene-based resin composition having a branch (strands) was (a) cooled with water, and then (b) chopped into pellets (cylindrical shape).

<Production of extruded foamed particles>

To prepare a resin mixture, blended were 100 parts by weight of the polypropylene-based resin composition having a branch and 0.02 parts by weight of talc, which was a cell nucleating agent. Thereafter, the resin mixture was supplied to the twin screw extruder (melting and kneading section) from a raw material supply section, and melting and kneading of the resin mixture was started at a cylinder temperature of 180°C and a screw rotation speed of 120 rpm. The amount of the resin mixture supplied to the twin screw extruder was 10 kg/h. In the middle of the melting and kneading of the resin mixture, carbon dioxide was injected as a blowing agent into the twin screw extruder from a blowing agent supply section, and an obtained composition was further melted and kneaded (melting and kneading step). The amount of the blowing agent supplied to the twin screw extruder was 0.25 kg/h. (With respect to 100 parts by weight of the resin mixture, 2.5 parts by weight of the blowing agent was supplied). A target rate of the expansion rate of the extruded foamed particles is 5.0 times to 6.0 times with respect to such an amount of the blowing agent supplied.
The melted and kneaded composition obtained through the melting and kneading step was extruded, at a throughput rate of 10 kg/h, through a die of a granulation section to an air phase having a pressure lower than the internal pressure of the extruder. From the extruded composition, foamed particles were obtained by a method in which (i) a chamber attached to an end of the die was filled with cooling water such that the cooling water was in contact with a resin discharge surface of the die and (ii) the melted and kneaded product extruded through holes of the die was cut in water (extruding step and chopping step). In this case, the temperature of the cooling water was 70°C, and the flow rate of the cooling water was 20.8 m³/hr. The number of the holes of the die used was three, and the throughput rate of the composition per hole of the die was 3.3 kg/h. In the die used, an interval between holes in the circumferential direction was 6.9 mm. The number of blades used for cutting was 6, and the rotation speed was 3,500 rpm. The diameter of each hole of the die was 0.8 mm.
Adhesion of the obtained polypropylene-based resin extruded foamed particles was determined, and the expansion rate and the open cell ratio of the obtained polypropylene-based resin extruded foamed particles were measured. Production conditions and measurement results are shown in Table 1.

(Example 2)

Polypropylene-based resin extruded foamed particles were obtained by the same method as in Example 1, except that the number of the holes of the die, the throughput rate of the composition per hole of the die, and the production conditions were changed as shown in Table 1. Adhesion of the obtained polypropylene-based resin extruded foamed particles was determined, and the expansion rate and the open cell ratio of the obtained polypropylene-based resin extruded foamed particles were measured. Production conditions and measurement results are shown in Table 1.

(Example 3)

Polypropylene-based resin extruded foamed particles were obtained by the same method as in Example 1, except that the flow rate of the cooling water and the production conditions were changed as shown in Table 1. Adhesion of the obtained polypropylene-based resin extruded foamed particles was determined, and the expansion rate and the open cell ratio of the obtained polypropylene-based resin extruded foamed particles were measured. Production conditions and measurement results are shown in Table 1.

(Example 4)

Polypropylene-based resin extruded foamed particles were obtained by the same method as in Example 1, except that the number of the holes of the die, the throughput rate of the composition per hole of the die, and the production conditions were changed as shown in Table 1. Adhesion of the obtained polypropylene-based resin extruded foamed particles was determined, and the expansion rate and the open cell ratio of the obtained polypropylene-based resin extruded foamed particles were measured. Production conditions and measurement results are shown in Table 1.

(Example 5)

Polypropylene-based resin extruded foamed particles were obtained by the same method as in Example 4, except that the throughput rate of the composition and the production conditions were changed as shown in Table 1. Adhesion of the obtained polypropylene-based resin extruded foamed particles was determined, and the expansion rate and the open cell ratio of the obtained polypropylene-based resin extruded foamed particles were measured. Production conditions and measurement results are shown in Table 1.

(Comparative Example 1)

Polypropylene-based resin extruded foamed particles were obtained by the same method as in Example 1, except that the interval between the holes in the circumferential direction in the die used and the production conditions were changed as shown in Table 1. Adhesion of the obtained polypropylene-based resin extruded foamed particles was determined, and the expansion rate and the open cell ratio of the obtained polypropylene-based resin extruded foamed particles were measured. Production conditions and measurement results are shown in Table 1. As shown in Table 1, in Comparative Example 1, since there was adhesion, it became impossible to produce the polypropylene-based resin extruded foamed particles. Therefore, it was impossible to measure an expansion rate and an open cell ratio.

(Comparative Example 2)

Polypropylene-based resin extruded foamed particles were obtained by the same method as in Example 1, except that the temperature of the cooling water and the production conditions were changed as shown in Table 1. Adhesion of the obtained polypropylene-based resin extruded foamed particles was determined, and the expansion rate and the open cell ratio of the obtained polypropylene-based resin extruded foamed particles were measured. Production conditions and measurement results are shown in Table 1. Note that, in Comparative Example 2, the expansion rate was 2.1 times, and was significantly lower than the target rate of 5.0 times and 6 times.

[Table 1]

| | Interval between holes in circumferential direction in die (mm) | Water temperature (°C) | Flow rate of water (m³/hr) | Throughput rate (kg/hr) | Number of holes | Throughput rate of composition per hole of die (kg/hr/hole) | Adhesion | Expansion rate (Times) | Open cell ratio (%) | Evaluation |
|---|---|---|---|---|---|---|---|---|---|---|
| Example 1 | 6.9 | 70 | 20.8 | 10 | 3 | 3.3 | No | 5.6 | 4.8 | Excellent |
| Example 2 | 6.9 | 70 | 20.8 | 10 | 2 | 5 | Somewhat yes | 5.5 | 6.2 | Good |
| Example 3 | 6.9 | 70 | 17.3 | 10 | 3 | 3.3 | Somewhat yes | 5.6 | 4.7 | Good |
| Example 4 | 6.9 | 70 | 20.8 | 10 | 4 | 2.5 | No | 5.5 | 3.1 | Excellent |
| Example 5 | 6.9 | 70 | 20.8 | 13.2 | 4 | 3.3 | No | 5.6 | 4.9 | Excellent |
| Comparative Example 1 | 6 | 70 | 20.8 | 10 | 3 | 3.3 | Yes | - | - | Poor |
| Comparative Example 2 | 6.9 | 60 | 20.8 | 10 | 3 | 3.3 | No | 2.1 | 3.2 | Poor |

From Table 1, overall evaluations were made as "good" or "excellent" with respect to the polypropylene-based resin extruded foamed particles of Examples 1 to 5, which were produced by the present production method, and the polypropylene-based resin extruded foamed particles of Examples 1 to 5 had good expansion rates, were prevented from adhering to each other, and had excellent qualities (in particular, reduction in open cells). Moreover, also in Example 5, in which the throughput rate was increased as compared with that in Example 4, the "adhesion", the "open cell ratio", and the "expansion rate" of the polypropylene-based resin extruded foamed particles were similar. From these facts, it was found that the present production method made it possible to obtain polypropylene-based resin extruded foamed particles which were prevented from adhering to each other and had excellent qualities (in particular, reduction in open cells) even under a high-production condition.

In contrast, the polypropylene-based resin extruded foamed particles of Comparative Example 1, in which the interval between the holes in the circumferential direction in the die was not more than 6.5 mm, adhered to each other and thus it became impossible to produce the polypropylene-based resin extruded foamed particles. Therefore, an overall evaluation was made as "poor". The polypropylene-based resin extruded foamed particles of Comparative Example 2, in which the temperature of the cooling water was not higher than 65°C, the expansion rate of the polypropylene-based resin extruded foamed particles was 2.1 times and significantly lower than the target rate of 5.0 times to 6 times. Therefore, an overall evaluation was made as "poor".

Industrial Applicability

The present invention can be suitably used in the fields of automobile interior members, shock-absorbing materials, packaging materials, heat insulating materials, and the like.

Reference Signs List

1    Melting and kneading device
2    Feeder
3    Blowing agent supply unit
3a   Blowing agent storage section
3b   Pump
4    Transportation section
5    Cooling section
6    Die
6a   Resin discharge surface
7    Cutter
7c   Rotation shaft
8    Chamber
10   Production device

**Claims**

1.  A method for producing polypropylene-based resin extruded foamed particles, comprising:

    a melting and kneading step of melting and kneading, with use of an extruder provided with a die having a plurality of holes, a composition containing a blowing agent and a resin mixture which contains a polypropylene-based resin having a branched structure;
    an extruding step of extruding the composition through the plurality of holes of the die to a region which has a pressure lower than that in the extruder and which is a liquid phase;
    a chopping step of chopping the composition in the region with use of a rotating cutter blade; and
    a step of obtaining polypropylene-based resin extruded foamed particles, wherein
    in the die, an interval between adjacent ones of the plurality of holes in a circumferential direction is not less than 6.5 mm, and
    a temperature of the liquid phase is not lower than 65°C.

2.  The method as set forth in claim 1, wherein a flow rate of the liquid phase is not less than 20 $m^3$/hr.

3. The method as set forth in claim 1 or 2, wherein a throughput rate of the composition per hole of the die is not more than 4.0 kg/h.

4. The method as set forth in any one of claims 1 through 3, wherein an expansion rate of the polypropylene-based resin extruded foamed particles obtained is 2 times to 15 times.

5. The method as set forth in any one of claims 1 through 4, wherein, in the die, an interval between adjacent ones of the plurality of holes in a radial direction is 5.5 mm to 15 mm.

6. The method as set forth in any one of claims 1 through 5, wherein, in the die, a diameter of each of the plurality of holes is less than 1.6 mm.

7. The method as set forth in any one of claims 1 through 6, wherein a pressure of the liquid phase with respect to the composition in the region is 0.01 MPa·G to 0.60 MPa·G.

8. The method as set forth in any one of claims 1 through 7, wherein the polypropylene-based resin having a branched structure is a resin obtained by melting and kneading a mixture containing a linear polypropylene-based resin, a conjugated diene-based compound, and a radical polymerization initiator.

9. The method as set forth in any one of claims 1 through 8, wherein the polypropylene-based resin having a branched structure is a polypropylene-based resin having a loss tangent tan $\delta$ of not more than 5 at 200°C and 0.1 rad/s.

10. The method as set forth in any one of claims 1 through 9, wherein a melt flow rate of the polypropylene-based resin having a branched structure is 0.5 g/ 10 minutes to 20.0 g/ 10 minutes.

11. The method as set forth in any one of claims 1 through 10, wherein a melt tension of the polypropylene-based resin having a branched structure is 3 cN to 20 cN.

12. The method as set forth in any one of claims 1 through 11, wherein a melting point of the resin mixture is 130°C to 165°C.

13. The method as set forth in any one of claims 1 through 12, wherein the blowing agent is used in an amount of 0.5 parts by weight to 7.0 parts by weight with respect to 100.0 parts by weight of the resin mixture.

14. The method as set forth in any one of claims 1 through 13, wherein an open cell ratio of the polypropylene-based resin extruded foamed particles obtained is not more than 6.5%.

15. A method for producing a polypropylene-based resin foamed molded product, comprising
molding polypropylene-based resin extruded foamed particles produced by the method recited in any one of claims 1 through 14.

FIG. 1

# FIG. 2

Radial direction

Circumferential
direction

N

R2

R1

6a

6

6b2

6b

6b

6b1

D

L=R1−R2

## INTERNATIONAL SEARCH REPORT

International application No.

**PCT/JP2022/048373**

| A. | CLASSIFICATION OF SUBJECT MATTER |
|---|---|

*B29B 9/06*(2006.01)i; *C08J 9/16*(2006.01)i; *B29C 44/00*(2006.01)i; *B29C 48/345*(2019.01)i; *B29C 48/87*(2019.01)i; *B29C 48/92*(2019.01)i

FI: B29C48/345; B29C48/92; B29C48/87; B29C44/00 E; B29B9/06; C08J9/16 CES

According to International Patent Classification (IPC) or to both national classification and IPC

| B. | FIELDS SEARCHED |
|---|---|

Minimum documentation searched (classification system followed by classification symbols)

B29B9/06; C08J9/16; B29C44/00; B29C48/345; B29C48/87; B29C48/92

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2004/080678 A1 (SEKISUI PLASTICS CO., LTD.) 23 September 2004 (2004-09-23) entire text | 1-15 |
| A | WO 2009/104671 A1 (SEKISUI PLASTICS CO., LTD.) 27 August 2009 (2009-08-27) entire text | 1-15 |
| A | JP 1-110911 A (GENERAL ELECTRIC CO <GE>) 27 April 1989 (1989-04-27) entire text | 1-15 |
| A | JP 5-116196 A (SEKISUI CHEMICAL CO LTD) 14 May 1993 (1993-05-14) entire text | 1-15 |
| A | JP 6-254935 A (SEKISUI CHEMICAL CO LTD) 13 September 1994 (1994-09-13) entire text | 1-15 |
| A | JP 6-182847 A (MABUCHI KK) 05 July 1994 (1994-07-05) entire text | 1-15 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 January 2023** | **07 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2022/048373** |

| Patent document cited in search report | | | Publication date (day/month/year) | Patent family member(s) | | | Publication date (day/month/year) |
| --- | --- | --- | --- | --- | --- | --- | --- |
| WO | 2004/080678 | A1 | 23 September 2004 | US 2006/0204604 A1 entire text | | | |
| | | | | EP 1607200 | A1 | | |
| | | | | TW 200427570 | A | | |
| | | | | KR 10-2005-0113642 | A | | |
| | | | | CN 1758994 | A | | |
| | | | | KR 10-2007-0068490 | A | | |
| WO | 2009/104671 | A1 | 27 August 2009 | CN 101945742 entire text | A | | |
| | | | | KR 10-2010-0101169 | A | | |
| | | | | TW 200946310 | A | | |
| JP | 1-110911 | A | 27 April 1989 | EP 305862 entire text | A1 | | |
| JP | 5-116196 | A | 14 May 1993 | (Family: none) | | | |
| JP | 6-254935 | A | 13 September 1994 | (Family: none) | | | |
| JP | 6-182847 | A | 05 July 1994 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018144299 A
- JP 2002542360 W
- WO 2020004429 A